# EUROPEAN PATENT APPLICATION

(11) **EP 3 421 111 A1**
(43) Date of publication of application: **02.01.2019**
(21) Application number: 18177436.5
(22) Date of filing: 13.06.2018
(51) Int. Cl.: B01D 33/073, B01D 33/21, B01D 33/50, B01D 33/76, B01D 33/46

(54) **A DEVICE FOR FILTERING FIBER SUSPENSIONS**

(30) Priority: 27.06.2017 SE 1730167
(71) Applicant: Valmet Technologies Oy, 02150 Espoo (FI)
(72) Inventor: OSWALDSON, Rolf, 80427 GÄVLE (SE); STRID, Kent, 81730 NORRSUNDET (SE)
(74) Representative: Berggren Oy, Helsinki & Oulu

(57) **Abstract**

A device for filtering of fiber suspensions, comprising a vat (1) with an inlet (2) for the suspension. In the vat has been arranged a rotatable axis (5) with peripheral channels (7) and at least one disc-like filter element (8), set at an angle against the rotatable axis (5). The filter element has a filtering surface (10) and inner flow channels for transporting filtrate, which has passed through the filtering surface, to one or more channels (7) in the inner rotating axis (5). The liquid flow in the channels (7) are combined in one end of the rotating axis (5) into at least one barometric downpipe (12) in order to generate the vacuum necessary for filtration. There are means (13) for detaching material deposited on the filtering surface (10), filtered out of the suspension. Additionally, there are means (14) for guiding out-filtered material down into a receiving chute and for cleaning the filtering surface (10) by means of a number of spray nozzles, and means (15) for flushing the out-filtered material down into at least one receiving chute (16). Detaching means (13), washing means (14) and receiving chute (16) are arranged beside the filter element (8). At the outlet end (19) of the receiving chute and by the bottom part (20) of the vat, there is a transport means (18) with an actuator (24), arranged to combine and transport away the out-filtered material.

## Description

The object of the present invention is to increase the operational reliability and improve the filtering result of a disc filter for filtering fiber suspensions which are characteristically comparatively easily dewatered according to the preamble of the following claim 1. The invention can also be used for suspensions which are difficult to dewater.

The term "fiber suspensions" means liquids and suspensions, which contain fibers and other occurring ingredients, which are meant to be filtered out. The fibers usually mean recycled cellulose fibers, but also newly produced cellulose fibers can come into question.

Mainly three relevant types of disc filters occur in this context, the first one according to the preamble of claim 1 where between two adjacent discs for filtering there is a means for removing detached material shaped like a chute, arranged so that its lower part delivers the material to a receiving device, which is usually made up of a screw conveyor placed below the vat and extends in its longitudinal direction mainly parallel to a rotatable axis. The aim of this filter type is to filter and dewater fiber suspensions which are comparatively difficult to dewater, where it is desirable that the dry matter content of the out-filtered fiber pulp is as high as possible. Therefore, it has been selected to use a filtering principle, where the fiber suspension is first filtered in a liquid phase and then the fiber cake formed on the filter discs is dried and thereafter detached from the filtering surface of the disc. The filtering surface of the discs is thereafter washed clean with an oscillating mobile washing device, where after the filtering cycle is again repeated. This aim and filtering method has provided the known disc filter structure of this type.

With the second main type, which does not correspond to the preamble of claim 1, where instead of the internal rotating axis there is arranged a rotor therein and along its rotational axis there is arranged a conveyor for receiving material detached from the filter discs and for taking it to one end of the rotor and the filter's vat.

The third main type, which corresponds to the preamble of claim 1, where between two adjacent discs for filtering there is a means for removing detached material shaped like a chute, arranged so that its lower part delivers the material to a receiving device, which is usually made up of a screw conveyor which extends in its longitudinal direction substantially parallel to the rotatable axis, where the conveyor is placed below the vat. The aim of this type of disc filter is to filter and dewater fiber suspensions, which are relatively easily dewatered, which is achieved by the rotational direction of the adjacent discs being downwards by the means for removing detached material. By the incoming suspension being fed in from outside the filter's trough, where the filtering surfaces of the rotating discs start to sink down into the suspension, a liquid flow is created into the filter's trough and the friction created between the pulp chute and the pulp layer created on the discs during the filtering is reduced. It has not been desired to have the dry matter content of the out-filtered fiber pulp as high as possible when after the fiber cake is detached, it is diluted with a washing liquid from an oscillating washing nozzle.

These known disc filter techniques have undesired drawbacks, such as: The first main type has the drawback that the out-filtered material amassed on the discs is partially pulled off during the end phase of the filtering cycle due to friction between the rotating discs and the stationary chutes placed between the discs, which causes the material to thicken in the fiber suspension in the vat. This is prevented from happening by diluting the incoming fiber suspension down to such a low concentration that the amassed fiber layer on the discs becomes so thin that it is not scraped off against the sides of the chute. This diluting of the incoming suspension yields a comparatively low capacity and makes the filtering apparatus less economical to use. Alternatively, the discs can be placed at a moderately increased axial distance from each other, which also makes the filtering apparatus large and less economical. In order to avoid scraping and thus thickening in the filter's vat, the distance between the chute and the rotating discs must be made to be large, which causes also this solution to make the filtering apparatus less economical.

The second main type of disc filter has the drawback that it is a comparatively expensive construction with an inner longitudinal screw conveyor placed inside the filter's rotor part. This means that the inner rotor part must be made rather bulky. The placement of the screw conveyor also makes the channel design of the inner rotor part more expensive, since these must be formed in a coronal shape outside of the internally placed screw conveyor. The out-filtered material which falls onto the screw conveyor, will additionally be able to fall onto and stick to the rotor's channels. One big drawback is also that a breakdown of the conveyor makes the entire filter unusable.

The third main type of disc filter has the drawback that out-filtered material is diluted with spray water from the oscillating washing device of the filtering surfaces. This leads to the out-filtered material being diluted without any control, and that means for removing out-filtered material cannot be designed in an optimal way to avoid that the out-filtered pulp sticks to the edge of these means. Out-filtered pulp also sticks to the oscillating nozzle when its spray pipe swings out over the area where the out-filtered pulp falls down. The oscillating washing nozzle also does not offer a fully good washing of the entire filtering surface, depending on the filter sectors' speed relative to the oscillating nozzle's speed, and when the out-filtered pulp can fall between the washing nozzles and the filtering surfaces of the discs.

The object of the invention is to further develop the device according to the preamble of claim 1, so that a from a process point of view more improved filtering device for filtering easily filtered fiber suspensions is obtained, where the out-filtered material is not diluted by spray water from the washing device of the filtering surfaces. The invention can also be used for suspensions which are difficult to dewater.

In order to be able to use the filter in this way and obtain full control of the outgoing pulp's concentration, it is required that the washing device for the discs is placed outside the pulp chute's opening and thus does not dilute the outgoing pulp in an uncontrolled manner with spray water from the washing device.

The pulp chutes can through this solution advantageously be designed with a maximal opening in order to achieve free fall of the out-filtered pulp.

This aim is fulfilled according to the invention by giving the device the characteristics that are evident in the following claim 1.

Further developments of the invention are presented in the dependent claims 2 - 9.

Advantageously according to the invention spray nozzles of a washing device of the filtering device are located in a space formed between a guide plate of the filtering device and chutes of the filtering device, advantageously below the guide plate.

According to advantageous features of the invention a guide plate of the filtering device is located above the washing location of the filtering surfaces such that the guide plate guides the out-filtered material and thereafter the filtering surface is washed. In accordance with an advantageous example spray nozzle of the washing device are located in immediate vicinity below the guide plate and thus in connection with the guide plate. According to a particularly advantageous example the guide plate and the spray nozzles are integrated but also separated guide plate and spray nozzles can be used. In particularly advantageously the spray nozzles are located on a bottom surface of the guide plate. Thus, washing before the liquid level of the filtering device is achieved. According to a particularly advantageous example the guide plate is located on top of pulp chutes' upper edge and the spray nozzles are placed in immediate vicinity thereof.

The design of the invention offers the following advantages:
1. No uncontrolled dilution of the out-filtered material with washing liquid from the washing device.
2. Prevention of out-filtered material from falling and sticking to the washing device's pipes and its spray nozzles.
3. Prevention of out-filtered material from falling between the washing nozzles and filtering surfaces.
4. Optimized size and design of the receiving chutes' openings for the out-filtered material which prevents the out-filtered material from sticking to the chutes' openings and causing blockage of these.
5. With stationary nozzles the entire filtering surface is washed by one disc during one rotation lap.
6. No oscillating spray pipes between the rotating discs.
7. The above-mentioned related advantages offer a better process operation with an even and comparatively high outgoing concentration and fewer operational disturbances and service needs when filtering relatively easily dewatered fiber suspensions compared to a disc filter with a chute and a washing device according to prior art.
8. Higher production capacity.

The filtering device according to the invention and its advantageous features also provides for higher level of filtering and thus a greater capacity is achieved. Furthermore, a possibility of changing direction of the filtering is possible due to the arrangement of the spray nozzles in the filtering device according to the invention and its advantageous features.

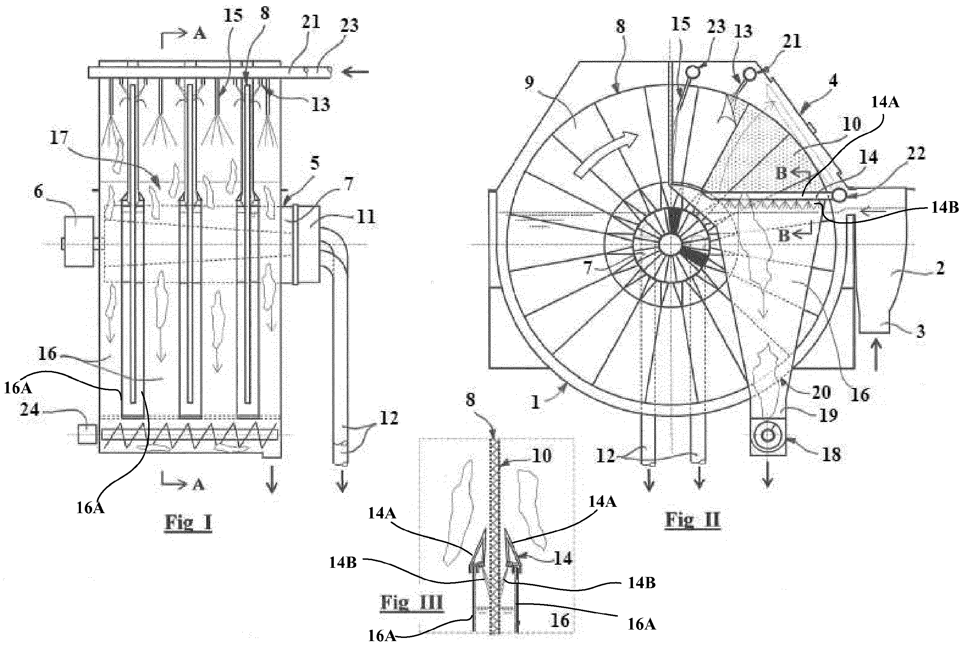

Further advantages of the invention will be discussed as follows:
With reference to the enclosed drawing, hereafter follows a description of an exemplary embodiment of the invention.

In the drawing:
Fig I is a schematic partially sectional side view of the filter device according to the invention,
Fig II is a sectional view taken along line A-A in fig I,
Fig III is a magnified section taken along lines B-B in fig II.

The filter device according to the invention will in the following be described as suited for dewatering and thickening of fiber suspensions, which are comparatively easily dewatered, but the filter device can also advantageously be used for suspensions, which are difficult to dewater.

The filter device consists of a u-shaped vat marked with a 1, with gables and a support structure and an inlet 2 for fiber suspensions. The inlet 2 is arranged along one side of the vat 1. An inlet pipe marked with a 3 leads to the inlet 2. The upper part of the vat is sealed with one or more hatches 4, which can be opened.

In the vat 1 there is arranged an inner rotatable axis 5 with an actuator 6 and flow channels 7 and a number of external disc-like filter elements 8 placed across the geometrical axis of the inner axis 5. The disc-like filter elements 8 are orientated substantially perpendicularly against the rotational axis of the axis 5. The individual disc-like filter element 8 extends in a ring-like configuration around the inner rotor part 5. This ring configuration is divided into a number of filter sectors 9. Each filter sector 9 has an external filtering surface, and inner channels for transporting filtrate, which has passed through the filtering surface 10, i.e. the filtered water, to one or more flow channels 7 in the inner rotatable axis 5.

The flow channels 7 in the rotatable axis 5 exit into a device 11 called a filtrate valve, meant to collect the water flow from a number of flow channels into at least one pipe 12 called a downpipe, in which the water falls through and thus creates the necessary vacuum required for the filtering method.

The device comprises means 13 for detaching out-filtered fibers and have deposited on the filtering surface 10. The detaching device 13 consists of spray nozzles placed to remove the layer of out-filtered fibers from the filter sectors as they rotate by, by means of water fed in via a connecting distribution pipe 21.

The device additionally comprises means 14, a washing device, which has at least two functions, namely to wash the filtering surface 10 and to steer the out-filtered fiber material into the chutes 16, also mentioned as compartments or pulp chutes. The chutes 16 are formed by partition walls 16A that keep the out-filtered material separate from washing liquid. The washing device 14 comprises a guide plate 14A placed on top of the chutes' 16 upper edge for guiding the out-filtered material towards chutes' opening 17. The washing device 14 consists also of spray nozzles 14B below the guide plate 14A and the spray nozzles 14B are placed to wash the filter elements' 8 filtering surface 10 as they rotate by, primarily by means of water fed in via a connecting distribution pipe 22. The spray nozzles 14B are located after guide plates 14A such that washing liquid is guides away from the out-filtered material and thus mixing of the washing liquid and the out-filtered material is avoided. The washing device's main secondary function is to aid in transporting away out-filtered fiber material through chutes 16 down to the collecting screw conveyor 18 situated below the filter's vat 1 without the washing device's nozzles diluting the concentration of the out-filtered fiber material. The spray nozzles 14B clean the filtering surface before the filtering surface sinks down to the suspension. By this compact washing device 14 arrangement is possible to increase the fiber suspension level in the vat 1. The washing device 14 is foldable for easier access to its spray nozzles and cleaning of them. Between each disc there are means 15 made up of spray nozzles placed to flush the out-filtered material down into the chutes 16, by means of water fed in via a connecting distribution pipe 23.

The present invention has primarily improved the operational reliability and filtering possibilities when filtering easily dewatered fiber suspensions, partly through placing the triangular stationary washing device 14 on top of the chutes' 16 upper edge, which steers the pulp, which ends up on these, toward the chutes' opening 17, and that the chutes' opening 17 has been maximized in order to obtain an as free and safe fall space as possible for the out-filtered material down into the receiving transport member 18 for transportation away from the filter.

Knowing the importance of the filtering method providing an even predetermined outgoing concentration of out-filtered material and that the filtering surface of the filter discs must be kept clean to obtain an optimal filtering opportunity, and further that out-filtered material does not have an opportunity to stick to and cause blockages in the chutes between the filter's rotating discs, the above-mentioned improvements provide the following:
1. A controlled filtering result is obtained when the washing device's 14 placement makes possible a controlled and stable outgoing concentration of the outgoing out-filtered material.
2. A more reliable operation is obtained when out-filtered material cannot fall on the spray nozzles placed beneath the washing device 14 and thus cause shutdowns and that the washing device 14 is designed like a guide plate such as a contactless scraper to steer pulp down into the chute opening 17. The guide plate is located at a distance from a filtering surface.
3. A further increased operational reliability is obtained also when the conventional oscillating spray pipes between the filter's discs are replaced with a stationary spray device 14 placed on top of the receiving chutes' 16 upper edge. Through this placement the filtering surface of the filter's discs is washed completely during only one rotational lap by the discs with the stationary washing device 14, which is of great importance when a clean washed filtering surface is a requirement for obtaining a maximal capacity, which is not possible with the conventional oscillating washing device, with which it can take up to several hours before the entire filtering surface is washed, resulting in loss of capacity. The stationary washing device 14 is also foldable for easy access to the device's spray nozzles when cleaning them.
4. Reduced operational disturbances are obtained when the receiving chutes' 16 opening 17 is maximized, which prevents out-filtered material from sticking to and blocking the chutes' opening.
5. Higher production capacity is obtained because the fiber suspension level in the vat can be raised up by this washing device arrangement.

The above improvements offer an overall controlled filtering method with a controlled concentration of out-filtered fiber material and over time a maintained high capacity and increased operational reliability with minimized operational disturbances.

## Claims

1. A device for filtering fiber suspensions, comprising a vat (1) with an inlet (2) for the suspension, a rotatable axis (5) with peripheral channels (7) arranged in the vat (1) and at least one disc-like filter element (8), which exhibits filter sectors (9), which is orientated at an angle toward the geometrical axis of the rotatable axis (5), where the filter element has an external filtering surface (10) and inner flow channels for transporting filtrate, which passes through the filtering surface, to one or more filtrate channels (7) in the inner rotating axis, means (13) for detaching out-filtered material of the suspension, deposited on the filtering surface (10), and a washing device (14) for washing the filtering surface (10) and transporting away the out-filtered material down into at least one receiving chute (16), which is arranged on the side of the vat (1), **characterized in that** the washing device (14) comprises at least one guide plate (14A) and spray nozzles (14B) and that the spray nozzles (14B) are located below the guide plate/s (14A).

2. Device according to claim 1, **characterized in that** the spray nozzles (14B) are located in the space formed between the guide plate/s (14A) and receiving chute/s (16) partition walls (16A).

3. Device according to claim 1 or 2, **characterized in that** the guide plate (14 A) and the spray nozzles (14B) are integrated to one-piece structure.

4. Device according to any of claims 1 - 3, **characterized in that** the spray nozzles are located on the bottom surface of the guide plate (14A).

5. Device according to any of the preceding claims, **characterized in that** the washing device (14) is turnable to be openable for cleaning of clogged spray nozzles (14B).

6. Device according to any of the preceding claims, **characterized in that** the inlet device (2) is arranged on the side of the vat (1), where the filter sectors (9) start to sink down into the suspension.

7. Device according to any of the preceding claims, **characterized in that** the washing device (14) is placed on top of an upper edge of the receiving chute / the receiving chutes (16).

8. Device according to any of the preceding claims, **characterized in that** the guide plate is located at a distance from the filtering surface.

9. Device according to any of the preceding claims, **characterized in that** the guide plate is a contactless scraper.
